# NEUE EUROPÄISCHE PATENTSCHRIFT

(11) **EP 1 950 440 B2**
(45) Veröffentlichungstag und Bekanntmachung des Hinweises auf die Entscheidung über den Einspruch: **13.11.2013**
(45) Hinweis auf die Patenterteilung: 18.03.2009
(21) Anmeldenummer: 07001761.1
(22) Anmeldetag: 26.01.2007
(51) Int. Cl.: F16D 13/64, F16D 21/06

(54) **Verfahren zur Herstellung eines Kupplungskorbes einer Doppelkupplung**
Method for manufacturing a clutch cage of a double clutch
Procédé de fabrication d'un panier d'embrayage d'un embrayage double

(43) Veröffentlichungstag der Anmeldung: 30.07.2008
(73) Patentinhaber: Hoerbiger Antriebstechnik GmbH, 86956 Schongau (DE)
(72) Erfinder: Oswald, Johann, 82438 Eschenlohe (DE); Ackermann, Jürgen, Dr., 86875 Waal (DE); Dietrich, Andreas, 86925 Fuchstal / Leeder (DE); Rank, Robert, Dr. Ing., 86899 Landsberg am Lech (DE)
(74) Vertreter: Kitzhofer, Thomas

(56) Entgegenhaltungen:
- EP-A- 0 943 828
- EP-A- 1 612 444
- EP-A1- 1 382 872
- EP-A1- 1 422 430
- EP-A1- 1 612 444
- EP-A1- 1 686 276
- EP-A2- 1 783 388
- EP-B1- 1 381 788
- WO-A-2005/119080
- DE-A1- 10 018 093
- DE-A1- 10 018 094
- DE-A1- 10 333 431
- DE-A1- 10 333 431
- DE-A1- 19 725 288
- DE-A1- 19 757 186
- DE-A1- 19 923 282
- DE-B3- 10 319 703
- FR-A- 1 389 259
- US-A- 2 745 268
- US-A- 3 249 995
- US-A- 3 964 326
- US-A- 6 145 643
- G. OEHLER ET AL: '"Schnitt, Stanz- und Ziehwerkzeuge" 6. Auflage', 1973, SPRINGER-VERLAG, BERLIN Seiten 204 - 205
- H. GRÄFEN: '"Lexikon der Werkstofftechnik', 1993, VDI-VERLAG GMBH, DÜSSELDORF

## Beschreibung

Die Erfindung betrifft ein Verfahren zur Herstellung eines Kupplungskorbes einer Doppelkupplung. Ein solcher Kupplungskorb und ein Verfahren zu seiner Herstellung sind aus der DE-B-103 19 703 bekannt, die den nächstliegenden Stand der Technik darstellt.

Doppelkupplungsgetriebe finden durch Ihre zahlreichen Vorteile immer häufiger Verwendung im KFZ-Bau. Ein Schlüsselelement dieser Getriebebauart ist die nass- oder trockenlaufende Doppelkupplung, welche das Motormoment auf eines der beiden Teilgetriebe leitet. Während eine Kupplung geschlossen ist, ist dabei die andere geöffnet.

Bisher bekannte Doppelkupplungen weisen zwei getrennte Kupplungskörbe eines Antriebsteils auf, das mit der Antriebswelle verbunden ist und das Antriebslamellen aufweist, die mit inneren bzw. äußeren Lamellen der inneren bzw. äußeren Kupplung der Doppelkupplung in Wirkverbindung gebracht werden können. Durch diesen Aufbau mit zwei Kupplungskörben ergibt sich jedoch bei bekannten Doppelkupplungen das Problem großer Baugrößen, was wiederum zu Problemen in den sehr begrenzten Bauräumen moderner Kraftfahrzeuge führt.

Verfahren zur Herstellung von kupplungen sind aus z.B. FR-1 389 259 bekannt.

Für derartige Doppelkupplungen werden spezielle Kupplungskörbe zur Aufnahme und zum Antrieb der Lamellen der Kupplung benötigt. Dabei gibt es bei konventionellen Kupplungen einen äußeren sowie einen inneren Kupplungskorb je Kupplung. Diese Elemente treiben die Reib- bzw. Belaglamellen der Kupplung an bzw. werden von ihnen angetrieben. Hierzu verfügen sie über spezielle Verzahnungen, in welche wiederum die Zähne der Lamellen eingreifen. Dabei kann es sich um Kerb-, Evolventen- oder andere Verzahnungen handeln. Im Stand der Technik wurden bisher die Verzahnungen in Großserien überwiegend durch Tiefziehen mit speziellen Werkzeugen hergestellt. Diese Werkzeuge sind jedoch extrem teuer und erst ab Serien von einigen 100.000 Stück pro Jahr rentabel. Bei anderen bekannten Verfahren fallen weniger Werkzeugkosten an, dafür ist der Fertigungsaufwand deutlich höher und damit mit höheren Kosten pro Stück verbunden.

Es ist daher Aufgabe der vorliegenden Erfindung, ein Verfahren zur Herstellung eines Kupplungskorbes einer Doppelkupplung zu schaffen, mit welchem Verzahnungen für die Kupplungskörbe bei geringen Werkzeug- und Stückkosten sowohl großserientechnisch als auch in kleinen Serien hergestellt werden können.

Die Lösung dieser Aufgabe erfolgt durch die Merkmale des Anspruches 1.

Beim erfindungsgemäßen Verfahren wird der Kupplungskorb, im Gegensatz zum Stand der Technik, gemäß dem der Korb einteilig hergestellt wird, nicht einteilig hergestellt, sondern die Verzahnung wird getrennt vom restlichen Korb erzeugt. Anschließend wird die Verzahnung am Korb fixiert, beispielsweise geschweißt, verstemmt oder auf andere Art und Weise befestigt. Für Kupplungen, wie sie im US-Patent 7,121,392 beschrieben sind, die keinen kompletten Topf benötigen, wird die Verzahnung zur Bildung des Korbes bei der Montage der Kupplung mit dem äußeren Kupplungsgehäuse verbunden.

Erfindungsgemäß erfolgt die Herstellung der Verzahnung durch Walzen eines Blechstreifens. Die Walzen haben die Form der später gewünschten Verzahnung. Durch dieses Verfahren wird also ein endloser Streifen der Verzahnung erzeugt, der nur durch die Länge des Blechrohlings begrenzt ist. Sollten in der Verzahnung zusätzliche Löcher bzw. Ausnehmungen, z.B. zur Ölversorgung der Kupplung, oder auch Ausklinkungen, spezielle Nasen, Ausbeulungen usw. zu Befestigungszwecken oder Ähnlichem erforderlich sein, ist dies durch eine entsprechende Form der Walzen des erfindungsgemäßen Verfahrens ebenfalls auf einfache technische Weise möglich. Auch können in dem endlosen Streifen mit herkömmlichen Stanzmaschinen leicht derartige Löcher usw. eingestanzt bzw. eingebracht werden. Es ist dementsprechend erfindungsgemäß möglich, den Blechstreifen in einer verhältnismäßig einfachen, mehrstufigen Walzstraße in die gewünschte Form zu bringen. Speziell die zuvor erwähnten Nasen, Löcher usw. sind demgegenüber bei herkömmlichen bekannten Tiefziehverfahren nur durch einen weiteren Arbeitsgang möglich.

Der gemäß dem erfindungsgemäßen Verfahren hergestellte endlose Verzahnungsstreifen wird nach dem Einbringen der Verzahnung in der benötigten Länge abgeschnitten und zu einer Trommel aufgerollt. Die Stoßenden werden nach Bedarf durch geeignete Verbindungsverfahren, wie Laserschweißen, Punktschweißen, durch Verstemmen entsprechend ausgeformter Enden oder auch durch andere geeignete Verbindungsverfahren miteinander verbunden. Dadurch entsteht dann die benötigte, verzahnte Trommel, die je nach Anwendungsfall entweder z.B. auf einer Blechplatte befestigt wird, wodurch ein kompletter Topf entsteht, oder, wie bei zuvor erwähnten Kupplungen gemäß dem US 7,121,392, direkt mit dem Kupplungsgehäuse verbunden wird.

Die Unteransprüche 2 bis 5 haben vorteilhafte Weiterbildungen des erfindungsgemäßen Verfahrens zum Inhalt.

Weitere Einzelheiten, Vorteile und Merkmale der Erfindung ergeben sich aus nachfolgender Beschreibung von Ausführungsbeispielen anhand der Zeichnung. Darin zeigt:
- Fig. 1: eine schematisch stark vereinfachte Prinzipdarstellung des Aufbaues einer Doppelkupplung, insbesondere einer nasslaufenden Doppelkupplung, und
- Fig. 2: eine vereinfachte Prinzipdarstellung der Komponenten einer Herstellungsvorrichtung zur Durchführung des erfindungsgemäßen Verfahrens.

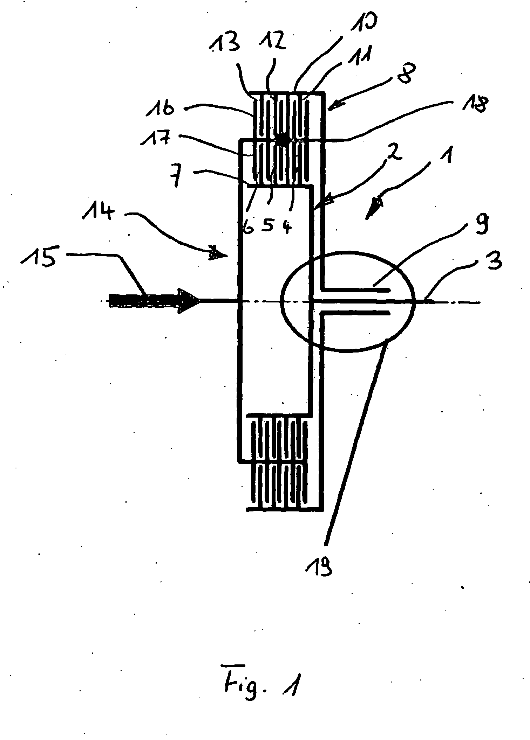

In Fig. 1 ist schematisch vereinfacht eine Doppelkupplung 1 eines Doppelkupplungsgetriebes dargestellt, das in Fig. 1 zur Vereinfachung der Beschreibung nicht näher dargestellt ist.

Die Doppelkupplung 1 weist eine innere Kupplung 2 auf, die mit einer inneren Welle 3 verbunden ist. Die innere Kupplung 2 weist einen Lamellenträger 7 auf, der mit inneren Lamellen versehen ist, wobei in der in Fig. 1 dargestellten Ausführungsform beispielhaft drei innere Lamellen 4, 5 und 6 verdeutlicht sind.

Die Doppelkupplung 1 weist ferner eine äußere Kupplung 8 auf, die mit einer äußeren Welle 9 versehen ist, die als Hohlwelle ausgebildet ist und in der koaxial die innere Welle 3 verläuft, was sich im Einzelnen aus der Darstellung der Fig. 1 ergibt. Die äußere, mit der äußeren Welle 9 verbundene Kupplung 8 weist einen äußeren Lamellenträger 10 auf, der mit äu-ßeren Lamellen versehen ist, wobei gemäß der in Fig. 1 dargestellten Ausführungsform beispielhaft drei äußere Lamellen 11, 12 und 13 vorgesehen sind.

Ferner weist die Doppelkupplung 1 ein Antriebsteil 14 auf, das auf einer durch den Pfeil 15 symbolisierten Antriebswelle angeordnet ist. Das Antriebsteil 14 weist innere und äußere Antriebslamellen auf, wobei im Beispielsfalle fünf äußere und fünf innere Antriebslamellen vorgesehen sind, von denen eine äußere Antriebslamelle mit der Bezugsziffer 16 und eine der inneren Antriebslamellen mit der Bezugsziffer 17 in Fig. 1 repräsentativ für alle Antriebslamellen gekennzeichnet sind.

Fig. 1 verdeutlicht, dass die inneren und äußeren Antriebslamellen 17 bzw. 16 auf einem einzigen Lamellenkorb 18 angeordnet bzw. fixiert sind, der zwischen dem inneren und äußeren Lamellenträger 7 bzw. 10 angeordnet ist. Das Vorsehen eines derartigen einzigen Lamellenkorbes 18 verringert deutlich die Baugröße der erfindungsgemäßen Doppelkupplung 1, was die eingangs erläuterten Vorteile ergibt.

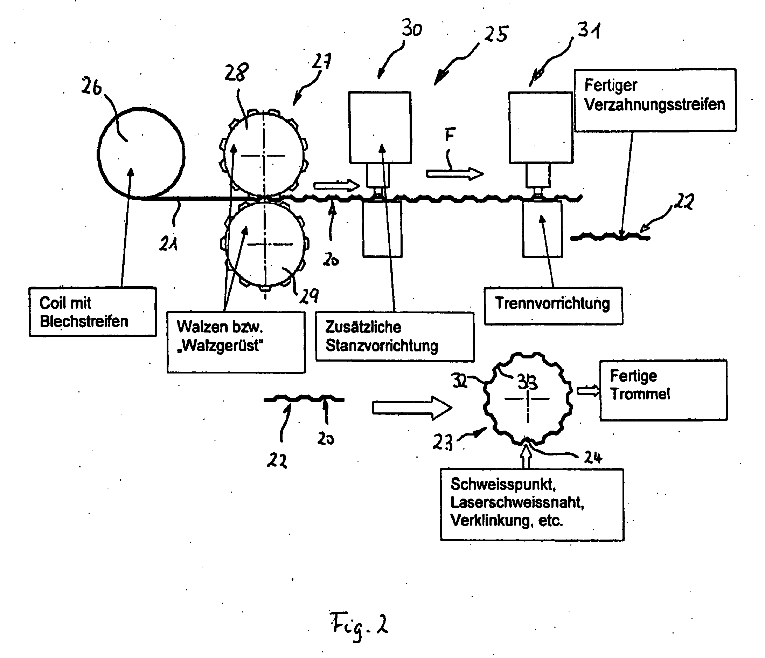

In Fig. 2 ist eine erfindungsgemäße Fertigungsvorrichtung 25 zur Durchführung eines erfindungsgemäßen Verfahrens zur Herstellung eines Kupplungskorbes einer Doppelkupplung, wie der in Fig. 1 erläuterten Doppelkupplung 1, dargestellt.

Die Vorrichtung 25 weist zunächst eine Zuführeinrichtung 26 auf, die bei der in Fig. 2 vereinfacht dargestellten Ausführungsform einen Coil mit einem Blechstreifen 21 umfasst. In Förderrichtung F des Blechstreifens 21 gesehen ist nach der Zuführeinrichtung 26 eine Walzeinrichtung 27 bzw. ein Walzgerüst vorgesehen, das bei der in Fig. 2 vereinfacht dargestellten Ausführungsform zwei Walzen 28 und 29 aufweist, die zu beiden Seiten des Blechstreifens 21 angeordnet sind. Wie aus Fig. 2 ersichtlich, weisen die Walzen 28 und 29 eine Außenkonturierung auf, die im Zuge des Walzens des Blechstreifens 21 die nach der Walzeinrichtung 27 im Blechstreifen 21 angebrachte Verzahnung 20 erzeugen. Nach der Walzeinrichtung 27 ist eine optionale bzw. zusätzliche Stanzvorrichtung 30 vorgesehen, mit der es möglich ist, beispielsweise Löcher oder Ausnehmungen im verzahnten Blechstreifen 21 anzubringen. Ferner weist die Vorrichtung 25 eine Trennvorrichtung 31 auf, mit der fertige Verzahnungsstreifen 22 in der jeweils gewünschten Länge abgetrennt werden können.

Der abgetrennte Verzahnungsstreifen 22 wird dann zu einer Trommel 24 gebogen, deren Stoßenden beispielsweise mittels einer Verschweißung (siehe Schweißpunkt 24) verbunden werden. Fig. 2 verdeutlicht, dass sich durch dieses Umbiegen zur fertigen Trommel 23 eine Trommel ergibt, die eine Außenverzahnung 32 und eine Innenverzahnung 33 aufweist.

Diese Trommel 23 kann dann zu einem Lamellenkorb weiterverarbeitet werden, indem sie mit einer in Fig. 2 nicht näher dargestellten Blechplatte verbunden wird.

Ferner ist es möglich, die verzahnte Trommel 23 mit einem in Fig. 2 ebenfalls nicht näher dargestellten Kupplungsgehäuse zu verbinden.

Folgende besondere Vorteile des erfindungsgemäßen Verfahrens sind hervorzuheben:
- einfachste Herstellung der Verzahnung,
- geringste Werkzeug- und Stückkosten,
- minimaler Verschnitt,
- beliebige Ausstanzungen, Ausklinkungen usw. in der Verzahnung in einem Arbeitsgang,
- beliebige Zahnformen auch mit kleinsten Modulen,
- auch Zahnformen mit z.B. nicht durchgängiger Verzahnung oder über der Zahnbreite sich ändernde Verzahnungen sind möglich.

Zur Ergänzung der schriftlichen Offenbarung wird hiermit explizit auf die zeichnerische Darstellung der Erfindung in den Fig. 1 und 2 verwiesen.

### Bezugszeichenliste

- 1: Doppelkupplung, insbesondere nasslaufende Doppelkupplung eines Doppelkupplungsgetriebes
- 2: Innere Kupplungen
- 3: Innere Welle
- 4-6: Innere Lamellen
- 7: Lamellenträger
- 8: Äußere Kupplung
- 9: Äußere Welle
- 10: Äußerer Lamellenträger
- 11-13: Äußere Lamellen
- 14: Antriebsteil
- 15: Antriebswelle
- 16, 17: Antriebslamellen
- 18: Lamellenkorb
- 19: Abtrieb der Doppelkupplung 1.
- 20: Verzahnung
- 21: Blechstreifen
- 22: Verzahnungsstreifen
- 23: Trommel
- 24: Schweißpunkt
- 25: Herstellungsvorrichtung
- 26: Zuführeinrichtung
- 27: Walzeinrichtung
- 28, 29: Walzen
- 30: Stanzvorrichtung
- 31: Trennvorrichtung
- 32: Außenverzahnung
- 33: Innenverzahnung
- F: Förderrichtung des Blechstreifens 21

## Patentansprüche

1. Verfahren zur Herstellung eines Kupplungskorbes einer Doppelkupplung (1), **gekennzeichnet durch** folgende Verfahrensschritte:
- Einwalzen einer Verzahnung (20) in einen Blechstreifen (21) mittels zweier Walzen (28, 29), die zu beiden Seiten des Blechstreifens (21) angeordnet sind, wobei die beiden Walzen (28, 29) eine Außenkonturierung aufweisen, mit der die Verzahnung (20) erzeugt wird;
- Abtrennen eines Verzahnungsstreifens (22) vom gewalzten Blechstreifen (21);
- Aufrollen des Verzahnungsstreifens (22) zu einer Trommel (23); und
- Verbinden der Stoßenden der Trommel (23).

2. Verfahren nach Anspruch 1, **dadurch gekennzeichnet, dass** die Verbindung der Stoßenden der Trommel (23) durch Laserschweißen, Punktschweißen, durch Verstemmen oder beliebiger anderer Verbindungsverfahren miteinander verbunden werden.

3. Verfahren nach Anspruch 1 oder 2, **dadurch gekennzeichnet, dass** die Verzahnung (20) mit Ausnehmungen, Ausklinkungen, Nasen und/oder Ausbeulungen versehen wird.

4. Verfahren nach einem der Ansprüche 1 bis 3, **dadurch gekennzeichnet, dass** die Trommel (23) auf einer Blechplatte fixiert wird.

5. Verfahren nach einem der Ansprüche 1 bis 3, **dadurch gekennzeichnet, dass** die Trommel (23) mit einem Kupplungsgehäuse der Doppelkupplung (1) verbunden wird.

## Claims

1. Method for manufacturing a clutch cage of a double clutch (1), **characterized by** the following method steps:
- rolling a toothing system (20) into a sheet metal strip (21) by means of two rolls (28, 29) which are arranged on either side of the sheet metal strip (21), the two rolls (28, 29) having an outer contouring with which the toothing system (20) is produced;
- separating a toothed strip (22) from the rolled sheet metal strip (21);
- rolling up the toothed strip (22) to form a drum (23); and
- joining the butt ends of the drum (23).

2. Method according to Claim 1, **characterized in that** the butt ends of the drum (23) are joined to each other by laser welding, spot welding, by peening over or any other desired joining methods.

3. Method according to Claim 1 or 2, **characterized in that** the toothing system (20) is provided with cut-outs, notches, lugs and/or bulges.

4. Method according to one of Claims 1 to 3, **characterized in that** the drum (23) is fixed to a sheet metal plate.

5. Method according to one of Claims 1 to 3, **characterized in that** the drum (23) is joined to a clutch housing of the double clutch (1).

## Revendications

1. Procédé de fabrication d'un panier d'embrayage d'un embrayage double (1), **caractérisé par** les étapes de procédé suivantes :
- laminage d'une denture (20) dans un ruban de tôle (21) au moyen de deux cylindres (28, 29) agencés de part et d'autre du ruban de tôle (21), les deux cylindres (28, 29) présentant un contour extérieur permettant la réalisation de la denture (20) ;
- séparation d'une bande dentelée (22) du ruban de tôle (21) laminé ;
- enroulement de la bande dentelée (22) en un tambour (23) ; et
- liaison des extrémités de butée du tambour (23).

2. Procédé selon la revendication 1, **caractérisé en ce que** les extrémités de butée du tambour (23) sont reliées entre elles par soudage au laser, soudage par points, par matage ou autres procédés d'assemblage quelconques.

3. Procédé selon la revendication 1 ou 2, **caractérisé en ce que** la denture (20) est pourvue d'évidements, d'encoches, de nez et/ou de bossages.

4. Procédé selon l'une des revendications 1 à 3, **caractérisé en ce que** le tambour (23) est fixé sur une plaque de tôle.

5. Procédé selon l'une des revendications 1 à 3, **caractérisé en ce que** le tambour (23) est relié à un carter d'embrayage de l'embrayage double (1).
